# EUROPÄISCHE PATENTSCHRIFT

(11) **EP 0 754 851 B1**
(45) Veröffentlichungstag und Bekanntmachung des Hinweises auf die Patenterteilung: **10.06.1998**
(21) Anmeldenummer: 96104097.9
(22) Anmeldetag: 15.03.1996
(51) Int. Cl.: F02M 37/10, F02M 37/22

(54) **Brennstoffördereinrichtung**
Fuel delivery system
Système d'alimentation en carburant

(30) Priorität: 18.07.1995 DE 19526142
(43) Veröffentlichungstag der Anmeldung: 22.01.1997
(73) Patentinhaber: Pierburg Aktiengesellschaft, 41460 Neuss (DE)
(72) Erfinder: Radermacher, Bernhard, 41748 Viersen (DE)

(56) Entgegenhaltungen:
- EP-A- 0 612 919
- EP-A- 0 621 405
- DE-A- 2 549 104
- DE-A- 4 332 717
- GB-A- 2 273 476
- US-A- 3 329 194
- US-A- 3 695 438
- US-A- 5 078 167
- US-A- 5 195 494
- US-A- 5 398 655
- PATENT ABSTRACTS OF JAPAN vol. 11, no. 310 (M-630) [2757] , 9.Oktober 1987 & JP-A-62 096773 (NIPPON DENSO), 6.Mai 1987,

## Beschreibung

Die Erfindung betrifft eine Brennstoffördereinrichtung für Brennkraftmaschinen nach dem Oberbegriff des Anspruchs 1.

Eine derartige Einrichtung ist in der US-A1 5,398,655 offenbart und zeigt dort eine von einer Druckleitung abzweigende Rückströmleitung, die ein Überdruckventil aufweist und in den Brennstofftank führt.

Bei dieser Einrichtung besteht der Nachteil, daß der gesamte von der Brennstoffpumpe geförderte Brennstoff durch einen Brennstoffilter strömt, so daß mit einer zeitlich schnellen Verschmutzung des Filters gerechnet werden muß.

Aus der DE-A1 42 42 242 ist eine Brennstoffördereinrichtung bekannt, bei der eine Brennstoffpumpe und ein Brennstoffilter als Aggregat ausgeführt sind, das in den Brennstofftank eingesetzt wird. Auch bei dieser Einrichtung besteht der Nachteil einer schnellen Verschmutzung des Filters.

Aus der US-A-5,078,167 ist ein Brennstoffversorgungssystem bekannt, bei dem nur der zur Brennkraftmaschine führende Brennstoff gefiltert wird. Damit wird erreicht, daß kleinere Filter oder eine längere Filterstandzeit möglich werden. Bei diesem System bilden ein Filter und ein Druckregler eine gemeinsame nicht demontierbare Baueinheit, d. h. bei einem Filterwechsel wird gleichzeitig immer der Druckregler ausgewechselt. Darüber hinaus besteht der Nachteil, daß der komplizierte Druckregler ggf. verschmutztem Brennstoff ausgesetzt ist.

Hiervon ausgehend liegt der Erfindung daher die Aufgabe zugrunde, bei einer gattungsgemäßen Einrichtung Maßnahmen aufzufinden, mit denen eine längere verschmutzungsfreie Filterstandzeit erreicht wird, wobei darüber hinaus eine Aggregation von Bauelementen der Einrichtung und ein universeller Einsatz der Einrichtung für jede beliebige Tankform möglich werden sollen.

Diese Aufgabe ist durch die im Kennzeichen des Patentanspruchs 1 angegebenen Merkmale gelöst worden. Vorteilhafte Weiterbildungen der Erfindung sind mit den Unteransprüchen angegeben.

Ein Ausführungsbeispiel der Erfindung ist in der Zeichnung dargestellt und wird nachfolgend beschrieben.

Diese zeigt:
**Fig. 1**
   einen schematischen Aufbau einer erfindungsgemäßen Einrichtung,
**Fig. 2**
   eine Anordnung in einem Satteltank.

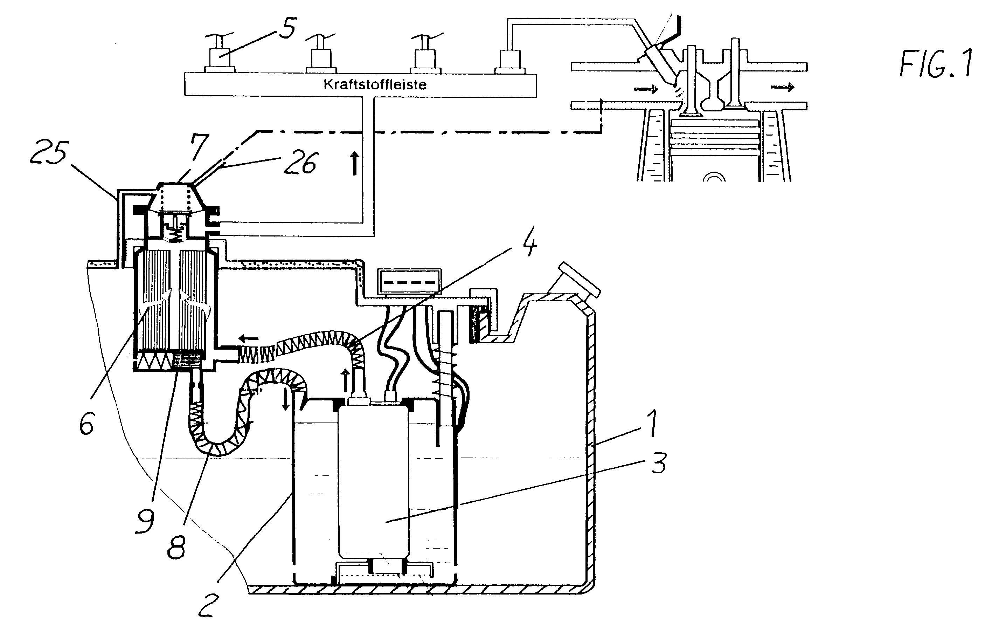

Fig. 1 zeigt eine Brenstoffördereinrichtung für eine Brennkraftmaschine mit einem Brennstofftank 1, mit einer in einem Ansaugbehälter 2 eingesetzten Innentankpumpe 3, die Brennstoff über eine Druckleitung 4 zu Einspritzventilen 5 der Brennkraftmaschine fördert. Im Zuge dieser Druckleitung 4 ist ein Brennstoffilter 6 angeordnet und nachgeordnet ein Druckregler 7, der als Druckreduzierventil arbeitet und den Druck in der Druckleitung 4 stromab des Druckreglers 7 auf den Arbeitsdruck der Einspritzventile 5 einstellt.

Erfindungsgemäß weist die Einrichtung eine Rückströmleitung 8 mit einem Überdruckventil 9 auf, die von der Druckleitung 4 stromauf des Brennstoffilters 6 abzweigt und in den Brennstofftank 1 führt, wobei das Überdruckventil 9 bei einem vorgegebenen, über dem vom Druckregler 7 geregelten liegenden Druckwert öffnet, so daß von der Innentankpumpe 3 im Überschuß geförderter Brennstoff über die Rückströmleitung 8 abfließen kann.

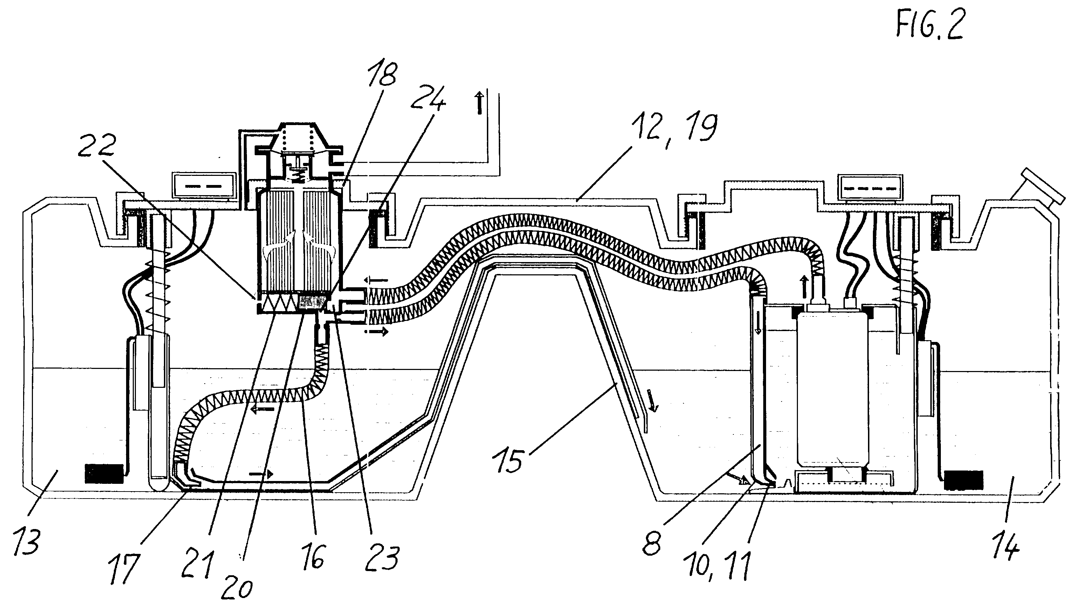

Es ist in der Ausführung nach Fig. 1 vorgesehen, daß die Rückströmleitung 8 in den Ansaugbehälter 2 einmündet. Alternativ kann vorgesehen sein, wie in Fig. 2 dargestellt ist, daß der Ausmündeabschnitt 10 der Rückströmleitung 8 als Strahlpumpe 11 ausgebildet ist, die aus dem Tank 1 in den Ansaugbehälter 2 fördert.

Fig. 2 zeigt schematisch eine Brennstoffördereinrichtung bei einem als Satteltank 12 ausgebildeten Brennstofftank. Dieser Brennstofftank weist zwei Teilkammern 13, 14 auf, die bei teilentleertem Tank 12 unterschiedlich hohe Brennstoffspiegel aufweisen können, da die Teilkammern 13, 14 unterhalb des Brennstoffspiegels nicht mehr miteinander verbunden sind durch eine den Sattel bildende Zwischenwandung 15. Es ist nun vorgesehen, daß die Rückströmleitung 8 stromab des Überdruckventils 9 eine Abzweigleitung 16 aufweist. Somit gelangt rückströmender Brennstoff einmal über die mit der aus Fig. 1 identischen Rückströmleitung 8 in den Ansaugbehälter 2 der einen Teilkammer 14 des Satteltanks und zum anderen über die Abzweigleitung 16 in die andere Teilkammer 13 des Satteltanks, wobei der Ausmündeabschnitt der Abzweigleitung 16 ebenfalls als Saugstrahlpumpe 17 ausgebildet ist, die durch den rückströmenden Brennstoff aus der Teilkammer 13 in die andere Teilkammer 14 fördert.

Wie in beiden Figuren dargestellt ist, kann es vorteilhaft sein, daß der Brennstoffilter 6 mit dem Überdruckventil 9 und/oder dem Druckregler 7 integriert ausgeführt ist und mittels eines Flansches 18 am Tankoberboden 19 angeordnet ist. Das Überdruckventil 9 ist als Kolbenventil 20 ausgeführt, wobei eine Kolben-Zylinderkammer 21 über eine Öffnung 22 mit dem Tankinnenraum und die andere Kolben-Zylinderkammer 23 mit der Druckleitung 4 bzw. Rückströmleitung 8 bei geöffneter Abströmöffnung 24 verbunden ist.

Es ist vorgesehen, daß die Abströmöffnung 24 über den Kolbenstellweg einen vorbestimmten, veränderlichen Abströmquerschnitt aufweist.

Alternativ zu den dargestellten Ausführungen kann der Druckregler anstelle eines dargestellten Anschlusses 25 für den Tankdruck einen Anschluß 26 für den Ansaugdruck der Brennkraftmaschine aufweisen (in Strichpunktlinie dargestellt), der die Auswirkungen des schwankenden Ansaugdrucks auf die Einspritzventilfunktion kompensiert.

Mit den erfindungsgemäßen Ausführungen wird eine längere Filterstandzeit ohne Verschmutzung erreicht, da nun die im Überschuß geförderte Brennstoffmenge nicht mehr durch den Brennstoffilter 6 gelangt. Die Aggregation der Bauteile Filter, Druck- und/oder Überdruckventil in Verbindung mit dem Flansch 18 ermöglicht eine kostensparende Fertigung und Anordnung ohne weitere Verbindungselemente.

In Verbindung mit der Anordnung der Einrichtung an einem Satteltank 12 läßt sich eine vorteilhafte Entleerung der Teilkammer 13 ohne Brennstoffpumpe erzielen.

Für besondere Betriebsbedingungen, z. B. Kaltstart bei niedriger Stromspannung bleibt das Überdruckventil 9 geschlossen und die Einspritzventile 5 werden bevorzugt mit Brennstoff versorgt.

## Patentansprüche

1. Brennstoffördereinrichtung für Brennkraftmaschinen mit einem einen Tankboden aufweisenden Brennstofftank (1), mit einer Innentankpumpe (3), einem Brennstoffilter (6), einem Druckregler (7) und einer Rückströmleitung (8) mit Überdruckventil (9),
die von einer Druckleitung (4) der Innentankpumpe (3) abzweigt und in den Brennstofftank (1) führt, wobei die Innentankpumpe (3) innerhalb eines Ansaugbehälters (2), der am Tankboden aufgesetzt ist, angeordnet ist und die Rückströmleitung (8) in diesen Ansaugbehälter (2) einmündet, **dadurch gekennzeichnet,** daß die Rückströmleitung (8) stromauf des Brennstoffilters (6) von der Druckleitung (4) abzweigt und daß das Überdruckventil (9) als Kolbenventil (20) ausgeführt ist, wobei eine Kolben-Zylinderkammer (21) über eine Öffnung (22) mit dem Tankinnenraum und die andere eine Abströmöffnung (24) aufweisende Kolben-Zylinderkammer (23) mit der Druckleitung (4) bzw. Rückströmleitung (8) bei geöffneter Abströmöffnung (24) verbunden ist.

2. Einrichtung nach Anspnrch 1, **dadurch gekennzeichnet**, daß ein Ausmündeabschnitt (10) der Rückströmleitung (8) als Strahlpumpe (11) ausgebildet ist, die aus dem Tank (1) in den Ansaugbehälter (2) fördert.

3. Einrichtung nach Anspruch 1 oder 2, **dadurch gekennzeichnet,** daß die Rückströmleitung (8) stromab des Überdruckventils (9) eine Abzweigleitung (16) aufweist, die in eine Teilkammer (13) eines Satteltanks (12) ausmündet, wobei ein Ausmündeabschnitt der Abzweigleitung (16) als Strahlpumpe (17) ausgebildet ist, die aus der einen Teilkammer (13) dieses Satteltanks in die andere Teilkammer (14) dieses Satteltanks fördert, in der die Innentankpumpe (3) bzw. der Ansaugbehälter (2) angeordnet ist.

4. Einrichtung nach einem der vorstehenden Ansprüche, **dadurch gekennzeichnet,** daß der Brennstoffilter (6) mit dem Überdruckventil (9) und/oder dem Druckregler (7) integriert ausgeführt ist.

5. Einrichtung nach Anspruch 5, **dadurch gekennzeichnet,** daß der Brennstoffilter (6) mittels eines Flansches (18) am Tankoberboden (19) angeordnet ist.

## Claims

1. Fuel delivery system for internal combustion engines with a fuel tank (1) with a tank bottom, with an internal tank pump (3), a fuel filter (6), a pressure regulator (7) and a return line (8) with pressure relief valve (9), which line branches off from a pressure line (4) of the internal tank pump (3) and leads into the fuel tank (1), the internal tank pump (3) being arranged inside an intake vessel (2) placed on the tank bottom and the return line (8) flowing into this intake vessel (2), characterized in that the return line (8) branches off from the pressure line (4) upstream of the fuel filter (6) and that the pressure relief valve (9) is executed as a piston valve (20), one piston cylinder chamber (21) being connected via an opening (22) to the interior of the tank and the other piston cylinder chamber (23), which has a discharge opening (24), being connected to the pressure line (4) or return line (8) when the discharge opening (24) is open.

2. System according to claim 1, characterized in that a discharge section (10) of the return line (8) is formed as a jet pump (11), which conveys from the tank (1) into the intake vessel (2).

3. System according to claim 1 or 2, characterized in that the return line (8) has a branch line (16) downstream of the pressure relief valve (9), which line discharges into a sectional chamber (13) of a saddle tank (12), a discharge section of the branch line (16) being formed as a jet pump (17), which conveys from one sectional chamber (13) of this saddle tank to the other sectional chamber (14) of this saddle tank, in which chamber the internal tank pump (3) or intake vessel (2) is arranged.

4. System according to one of the preceding claims, characterized in that the fuel filter (6) is executed integrated with the pressure relief valve (9) and/or the pressure regulator (7).

5. System according to claim 5, characterized in that the fuel filter (6) is arranged on the tank ceiling (19) by means of a flange (18).

## Revendications

1. Système d'alimentation en carburant pour des moteurs à combustion interne, avec un réservoir de carburant (1) d'un fond, avec une pompe à carburant interne (3), un filtre à carburant (6), un régulateur de pression (7) et une conduite de retour (8) munie d'une soupape de sûreté (9), qui part d'une conduite de refoulement (4) de la pompe à carburant interne (3) et mène au réservoir de carburant (1), la pompe à carburant interne (3) étant disposée à l'intérieur d'un bac d'aspiration (2), monté sur le fond du réservoir, et la conduite de retour (8) débouchant dans ce bac d'aspiration (2), caractérisé en ce que la conduite de retour (8) part de la conduite de refoulement (4) en amont du filtre à carburant (6) et en ce que la soupape de sûreté (9) est réalisée sous forme de soupape à piston (20), un compartiment cylindrique (21) du piston étant relié par un orifice (22) à l'espace interne du réservoir, et l'autre compartiment cylindrique (23) du piston, doté d'un orifice d'échappement (24), étant relié à la conduite de refoulement (4) et/ou à la conduite de retour (8), en position d'ouverture de l'orifice d'échappement (24).

2. Système suivant la revendication 1, caractérisé en ce qu'un débouché (10) de la conduite de retour (8) est réalisé sous forme de pompe à jet (11), qui refoule du réservoir (11) dans le bac d'aspiration (2).

3. Système suivant l'une des revendications 1 et 2, caractérisé en ce que la conduite de retour (8) présente, en aval de la soupape de sûreté (9), une conduite de dérivation (16) qui débouche dans un compartiment partiel (13) d'un réservoir en selle (12), un débouché de la conduite de dérivation (16) étant réalisé sous forme de pompe à jet (17), qui refoule de l'un des compartiments partiels (13) de ce réservoir en selle dans l'autre compartiment partiel (14) de ce réservoir en selle, dans lequel est disposée la pompe à carburant interne (3) et/ou le bac d'aspiration (2).

4. Système suivant l'une des revendications précédentes, caractérisé en ce que le filtre à carburant (6) a une réalisation intégrée avec la soupape de sûreté (9) et/ou le régulateur de pression (7).

5. Système suivant la revendication 5, caractérisé en ce que le filtre à carburant (6) est monté au moyen d'une bride (18) sur le fond supérieur (19) du réservoir.
